# FASCICULE DE BREVET EUROPEEN

(11) **EP 2 190 131 B1**
(45) Date de publication et mention de la délivrance du brevet: **28.03.2018**
(21) Numéro de dépôt: 09175103.2
(22) Date de dépôt: 12.06.2009
(51) Int. Cl.: H04B 7/08, H04L 7/00

(54) **PROCÉDÉ DE GESTION D'ANTENNES POUR UN SYSTÈME DE COMMUNICATION PAR ONDE RADIOFRÉQUENCE DE TYPE DECT ET SYSTÈME CORRESPONDANT**
VERFAHREN ZUR ANTENNENSTEUERUNG FÜR EIN DECT-FUNKÜBERTRAGUNGSSYSTEM UND DAS ENTSPRECHENDE SYSTEM
METHOD FOR CONTROLLING ANTENNAS FOR A RADIOFREQUENCY COMMUNICATION SYSTEM OF DECT-TYPE AND THE CORRESPONDING SYSTEM

(30) Priorité: 13.06.2008 FR 0853915
(43) Date de publication de la demande: 26.05.2010
(62) Demande divisionnaire de: 09162543.4
(73) Titulaire: Safran Electronics & Defense, 92100 Boulogne-Billancourt (FR)
(72) Inventeur: Brevalle, Christophe, 75015, Paris (FR)
(74) Mandataire: Le Guen-Maillet

(56) Documents cités:
- WO-A-96/02984
- US-A- 5 960 046
- US-B1- 6 690 927

## Description

La présente invention concerne un procédé d'établissement d'une communication entre un terminal dit esclave et un terminal dit maître d'un système de communication par onde radiofréquence de type DECT. Chaque terminal est équipé d'une pluralité d'antennes et comporte des moyens pour mesurer le niveau de puissance d'un signal reçu par chaque antenne et des moyens pour sélectionner l'une de ces antennes comme antenne de réception par comparaison des niveaux de puissance ainsi mesurés.

Une communication par onde radiofréquence est utilisée pour déployer dans un environnement donné un service de type audio et/ou de transfert de données dans lequel des terminaux de communication communiquent entre eux des données qui sont soit vocales, soit autres, telles que par exemple des images, des fichiers de données, etc.

Une communication par onde radiofréquence consiste à transporter ces données par des ondes radiofréquences qui se propagent dans cet environnement afin que le signal porteur de ces données soit acheminé d'un terminal émetteur vers soit un terminal récepteur soit plusieurs terminaux récepteurs dans le cas où le signal est diffusé.

La présente invention est décrite par la suite dans le cas d'un réseau défini par les normes DECT (Digital Enhanced Cordless Telecommunications en anglais) mais l'invention est destinée à être mise en oeuvre pour d'autres réseaux de communication de ce type, c'est-à-dire des réseaux de communication TDMA avec synchronisation en temps et en fréquence des terminaux de communication, appelés par la suite terminaux esclaves, avec un terminal de communication, appelé par la suite terminal maître, et ce à partir d'un signal de balise diffusé par ce terminal maître, chacun des terminaux étant équipé d'une pluralité d'antennes et comportant des moyens permettant de mettre en oeuvre un mécanisme de diversité d'antennes, c'est-à-dire des moyens pour mesurer le niveau de puissance d'un signal reçu par chaque antenne et des moyens pour sélectionner l'une de ces antennes comme antenne de réception par comparaison des niveaux de puissance ainsi mesurés.

Un réseau de type DECT est un réseau TDMA, c'est-à-dire un réseau dans lequel les données échangées entre terminaux sont transmises sous forme de données numériques dans des intervalles de temps (time slots en anglais). On utilisera le terme *slot* pour désigner un tel intervalle de temps car c'est le terme qui est utilisé par l'homme du métier. On l'écrira en italique pour toutefois marquer son origine anglo-saxonne.

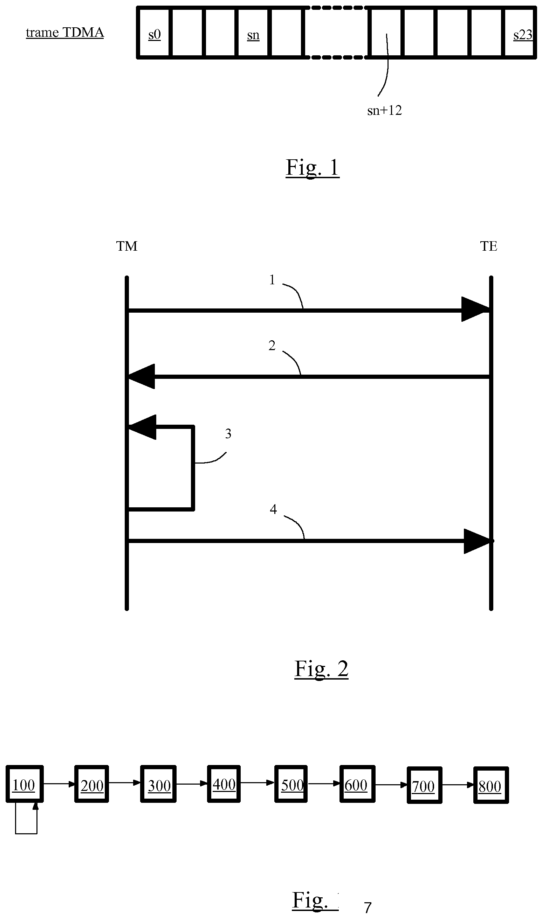

L'accès multiple par division de temps (TDMA) permet à différents utilisateurs de partager, au cours du temps, l'utilisation d'une bande de fréquence donnée, partage qui est défini par une trame dite trame TDMA qui fixe la disposition temporelle des *slots*. La trame TDMA est définie, dans le cas particulier d'un système basé sur les normes DECT, comme étant un ensemble constitué de 24 *slots* successifs notés s0 à s23 représentés à la Fig. 1. La durée de la trame TDMA est alors au moins égale à la somme des durées de ces 24 *slots.* Selon la norme DECT, la durée d'une trame est fixée à 10ms. Les douze premiers *slots* sont dédiés à l'émission du terminal maître vers le terminal esclave et les douze derniers *slots* sont dédiés à l'émission du terminal esclave vers le terminal maître. La trame DECT est ainsi partagée en deux parties de 5ms chacune.

De plus, dans un réseau de type DECT, le terminal maître diffuse un signal de balise que tout autre terminal esclave doit recevoir pour pouvoir, d'une part, se synchroniser en temps et en fréquence avec le terminal maître et, d'autre part, pour que le terminal maître alloue des ressources radio pour chaque terminal esclave et communique à chaque terminal esclave les ressources radio qui lui sont allouées pour que la communication s'établisse et se maintienne entre lui et le terminal esclave.

Un procédé d'établissement d'une communication entre un terminal esclave et un terminal maître comporte typiquement les étapes suivantes :
- une étape de diffusion permanente d'un signal de balise par le terminal maître,
- une étape de recherche de synchronisation en temps et en fréquence dudit terminal esclave avec le terminal maître,
- une étape de synchronisation du terminal esclave avec le terminal maître,
- une étape d'émission d'un signal de demande d'allocation de ressources radio,
- une étape de réception par le terminal maître du signal de demande d'allocation de ressources radio,
- une étape d'émission par le terminal maître des ressources radio allouées, et
- une étape d'échanges de signaux de trafic entre le terminal maître et le terminal esclave, au cours de laquelle à chaque réception d'un signal de trafic par soit le terminal esclave, soit le terminal maître, un terminal récepteur teste si plus d'une antenne reçoit un signal de trafic et sélectionne alors l'antenne de réception comme étant celle sur laquelle le niveau de puissance mesuré du signal reçu est le plus élevé,

L'allocation des ressources radio par un terminal maître pour l'établissement d'une communication avec un terminal esclave consiste à dédier une porteuse constituée de deux *slots* de trame TDMA, l'un référencé sn sur la Fig. 1 pour l'émission de données et l'autre référencé s(n+12) pour la réception de données.

Enfin, pour pallier l'atténuation des ondes radiofréquences dues à des réflexions sur des obstacles situés sur le chemin reliant deux terminaux, la norme DECT a défini un mécanisme de diversité d'antennes et un mécanisme dit de *timing advance* qui sont mis en oeuvre par un protocole défini par la norme ETSI EN 300 175-3 V1.4.2 (1999-06) Part 3: Medium Access Control (MAC) layer.

Le mécanisme de diversité d'antennes est habituellement mis en oeuvre afin d'améliorer la qualité des signaux reçus, et notamment de s'affranchir des trajets multiples dus à la réflexion des ondes sur des obstacles, tels que des bâtiments, situés entre les terminaux alors en communication. Un tel mécanisme de diversité d'antennes est par exemple décrit dans le document WO 96/02984 dans lequel les données transmises dans un *slot* sont accompagnées d'un préambule comportant des première et seconde parties servant à la mesure de la puissance et/ou de la qualité reçue par chaque antenne du terminal. L'antenne qui a donné la meilleure qualité de réception ou la puissance la plus élevée est celle qui est choisie pour la réception de signaux de trafic par ledit terminal.

Le mécanisme de *timing advance* est un mécanisme classiquement utilisé en communication numérique. Il consiste à envoyer à chaque terminal esclave une valeur de temps, définie selon la distance entre ce terminal esclave et le terminal maître, afin que le terminal esclave avance ou retarde l'émission de ses trames.

La Fig. 2 représente schématiquement les échanges protocolaires entre un terminal esclave TE et un terminal maître TM qui sont requis par la norme DECT préalablement à la mise en oeuvre du mécanisme de diversité d'antennes et de *timing advance.*

Selon la norme DECT, les mécanismes de diversité d'antennes et de *timing advance* requièrent qu'une communication soit établie entre le terminal esclave TE et le terminal maître TM, c'est-à-dire que le terminal esclave TE ait reçu la porteuse qui lui est allouée par le terminal maître TM pour cette communication. Pour cela, le terminal maître TM envoie à tous les terminaux esclaves via un signal de balise qu'il est apte à échanger des trames à préambule long (étape 1) lors d'une communication. Un terminal esclave TE, qui veut établir une communication avec le terminal maître TM, lui répond qu'il est également apte à échanger des trames à préambule long via un message « quality » (étape 2). Dès lors, les deux terminaux échangent des trames à préambule long et reçoivent ces trames en mettant en oeuvre le mécanisme de diversité d'antennes (étape 3). De plus, lorsqu'il est en communication, le terminal maître TM peut établir la durée de propagation aller/retour de l'onde et ainsi déterminer la distance qui le sépare du terminal esclave TE. Le terminal maître TM détermine alors une première valeur de *timing advance* en fonction de cette distance et l'envoie au terminal esclave TE de manière à ce que le terminal esclave TE retarde ou avance son temps de début d'émission de trame (étape 4).

Si le terminal esclave TE n'est pas apte à échanger des trames à préambule long, le mécanisme de diversité n'est pas mis en oeuvre et le type de trames échangées au cours de la communication est une trame à préambule normal, c'est-à-dire une trame comportant un champ S suivie d'un champ D relatif aux données utiles à transmettre. On peut noter que le mécanisme de *timing advance* est toutefois mis en oeuvre.

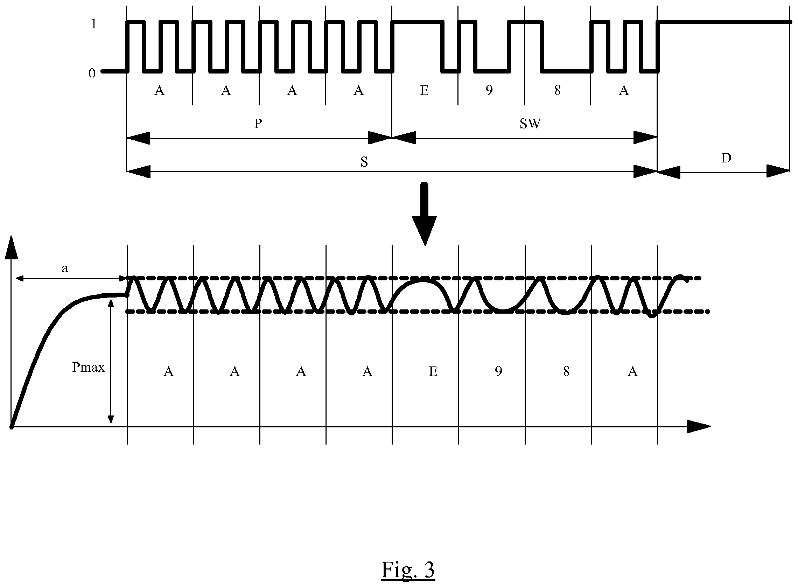

La Fig. 3 représente schématiquement l'évolution temporelle d'une trame DECT à préambule normal. En haut de la Fig. 3 est représentée la version numérique de la trame DECT modulée tandis que, en bas de la Fig. 3, est représentée la version analogique de la trame DECT à moduler.

Le champ S comporte un préambule P de 16 bits et un mot de synchronisation SW également de 16 bits. Le préambule P est subdivisé en 4 mots de 4 bits chacun dont les valeurs hexadécimales sont respectivement 0xA, 0xA, 0xA, 0xA (ou 0x5, 0x5, 0x5, 0x5 comme on le verra par la suite), et le mot de synchronisation SW est subdivisé en 4 mots de 4 bits chacun dont les valeurs hexadécimales sont respectivement 0xE, 0x9, 0x8, 0xA (ou 0x1, 0x6, 0x7, 0x5 comme on le verra également par la suite). On peut noter que la puissance nominale d'émission de la trame augmente graduellement d'une valeur nulle à une valeur maximale Pₘₐₓ pendant une durée a dite d'attaque.

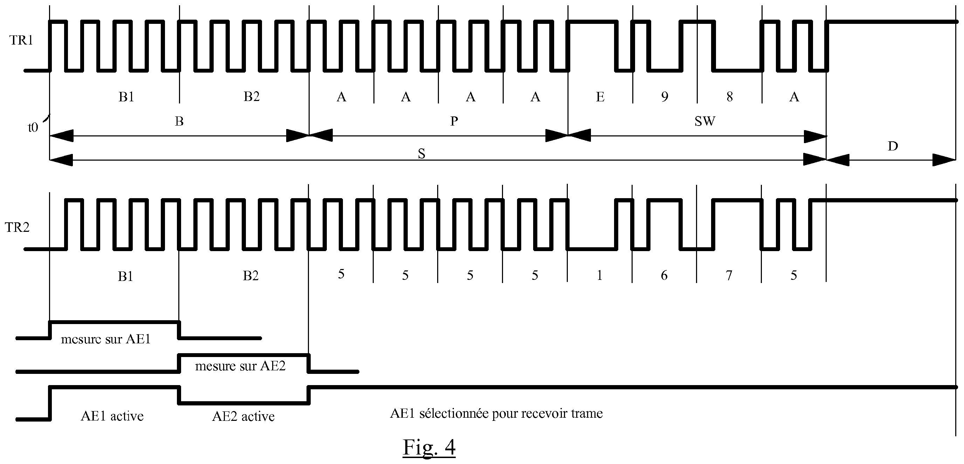

La Fig. 4 représente schématiquement l'évolution temporelle d'une trame DECT à préambule long. A la trame DECT de la Fig. 3 est ajouté, en son début, un mot B de 16 bits alternativement égaux à 0 et 1.

Lorsqu'un terminal émetteur, par exemple le terminal maître TM, émet une trame à préambule long TR1 à destination d'un autre terminal, par exemple le terminal esclave TE, le terminal maître TM attend la réception d'une trame à préambule long TR2 émis par le terminal esclave TE. Le mot B de la trame TR2 est complémentaire du mot B de la trame TR1, c'est-à-dire que lorsqu'un bit du mot B de la trame TR1 vaut 0, celui de la trame TR2 vaut 1 et réciproquement, les 4 mots du préambule P de la trame TR1 ont pour valeurs hexadécimales 0xA, 0xA, 0xA, 0xA tandis que ceux de la trame TR2 ont pour valeurs 0x5, 0x5, 0x5, 0x5 et les 4 mots du mot de synchronisation SW de la trame TR1 ont pour valeurs hexadécimales 0xE, 0x9, 0x8, 0xA tandis que ceux de la trame TR2 ont pour valeurs hexadécimales 0x1, 0x6, 0x7, 0x5. Les valeurs hexadécimales des mots du préambule P et du champ de synchronisation SW de la trame TR2 sont donc également complémentaires des valeurs hexadécimales des mots du préambule P et du champ de synchronisation SW de la trame TR1.

Lorsque la trame TR2 est reçue, le terminal maître TM mesure le niveau de puissance du signal reçu (encore appelé mesure RSSI = Received Signal Strength Indication en anglais) sur une première antenne AE1, pendant le premier octet B1 du mot B de la trame TR2, et le niveau de puissance du signal reçu sur une seconde antenne AE2, pendant le second octet B2 du mot B. On peut noter que les instants de début de ces mesures ainsi sont préalablement déterminés à partir de l'instant t0 de début d'envoi de la trame TR1 par le terminal maître TM. De plus, la durée de ces mesures est égale à la durée d'un octet du mot B.

Le terminal maître TM sélectionne alors l'une des deux antennes AE1 ou AE2 comme antenne de réception, en l'occurrence celle sur laquelle le niveau de puissance mesuré est le plus élevé. Le reste de la trame TR2 est alors reçue, préambule P, champs de synchronisation SW et données D, à partir de cette antenne de réception ainsi sélectionnée en l'occurrence l'antenne AE1 selon l'exemple de la Fig. 4.

Pour qu'une communication par onde radiofréquence sur de tels réseaux soit de qualité acceptable, il faut que les ondes radiofréquences porteuses de données à transmettre ne soient pas excessivement atténuées entre le terminal maître et le terminal esclave avec qui il est en communication. Mais, il est également nécessaire que le niveau de puissance des ondes radiofréquences porteuses du signal de balise soit suffisant afin que le terminal esclave puisse si besoin est se synchroniser avec le terminal maître et établir une nouvelle communication.

L'atténuation du niveau de puissance d'une onde radiofréquence est due, notamment, au masquage de l'antenne par le support qui porte le terminal tel qu'une personne ou un véhicule. En effet, une partie de ce support tel que par exemple la tête d'une personne ou une autre partie de son corps, peut provoquer dans certaines situations l'atténuation de cette onde et former ainsi ce qui est couramment appelé des zones d'ombre, c'est-à-dire des zones où cette partie du support masquent l'antenne de réception.

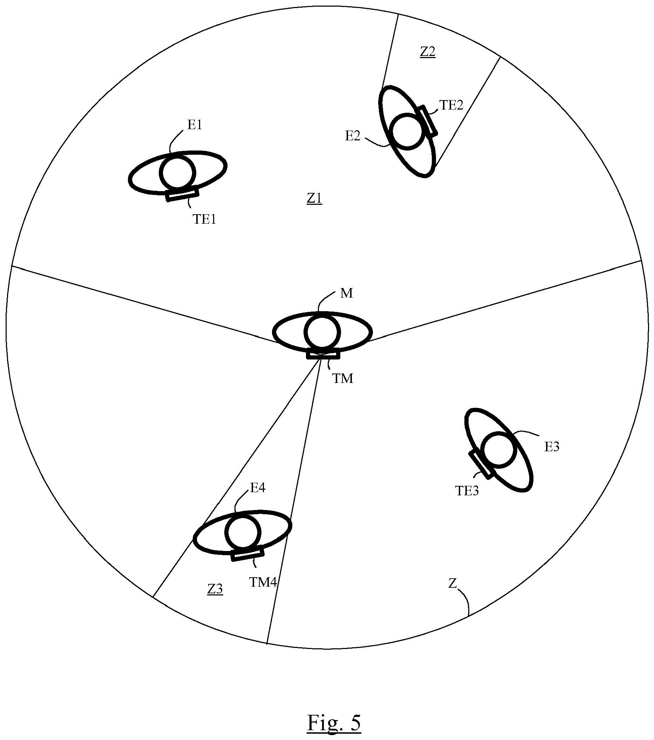

A titre d'illustration, à la Fig. 5, est représenté un exemple d'un système de communication par onde radiofréquence dans le cas où chaque terminal, qu'il soit maître ou esclave, est porté par une personne susceptible de se déplacer à tout moment et où chaque terminal comporte une pluralité d'antennes montées solidaires sur le terminal, lui-même fixé sur le poitrail de la personne. Chaque terminal est pourvu d'un mécanisme de diversité d'antennes qui lui permet de sélectionner l'antenne de réception sur laquelle est mesuré le niveau de puissance le plus élevé.

Selon cet exemple, un terminal maître TM est porté par une personne M que l'on suppose figée dans une position, et chaque autre personne Ei (i=1 à 4) qui porte un terminal esclave TEi se trouve également figée dans une position particulière vis-à-vis à la personne M et à la même distance de la personne M. Supposons que le terminal maître TM diffuse un signal de balise dans la zone Z dont le niveau de puissance est suffisant pour que chaque terminal esclave TEi puisse recevoir ce signal.

Considérons maintenant les différentes positions relatives des personnes Ei vis-à-vis de la personne M et leur influence sur la qualité de la transmission entre les différentes antennes.

Tout d'abord, considérons la personne M. Une des antennes de son terminal TM diffuse un signal de balise mais du fait que l'antenne est solidaire du terminal TM et que le terminal TM est positionné sur le poitrail de la personne M, le niveau de puissance du signal de balise n'est pas homogène sur toute la zone Z. En effet, le corps de la personne M crée une zone d'ombre Z1 pour cette antenne qui se situe grossièrement sur l'arrière de la personne M. On peut noter que les antennes du terminal TM étant toutes solidaires du terminal TM fixé sur le poitrail de la personne M, une zone d'ombre est créée par le corps de la personne quelle que soit l'antenne utilisée pour la diffusion du signal de balise.

Ainsi, le niveau de puissance du signal de balise dans la zone Z1 est toujours atténué par rapport au niveau de puissance de ce signal dans le reste de la zone Z.

Les personnes E1 et E2, qui se trouvent dans cette zone d'ombre Z1, reçoivent donc un signal de balise atténué. Cette atténuation est d'autant plus importante pour la personne E2, du fait de sa position relative par rapport à la personne M. En effet, chaque antenne du terminal TE2 se trouve dans une zone d'ombre Z2 provoquée par le corps de la personne E2, induisant ainsi une atténuation supplémentaire du signal de balise. La personne E1, quant à elle, reçoit le signal de balise d'un niveau de puissance plus élevé du fait qu'aucune zone d'ombre sur les antennes du terminal TE1 n'est provoquée par le corps de la personne E1.

La personne E3 est positionnée de sorte que les antennes de son terminal TE3 reçoivent le signal de balise sans atténuation. On rappelle qu'ici l'influence de la distance séparant les terminaux sur l'atténuation du signal émis n'est pas considérée du fait que tous les terminaux esclaves sont à la même distance de la personne M.

Enfin, la personne E4 est positionnée de sorte que son corps crée une zone d'ombre Z3 pour les antennes de son terminal provoquant l'atténuation du signal de balise reçu.

Les systèmes de communication par onde radiofréquence dans lesquels les terminaux de communication sont portés par des supports susceptibles de se déplacer les uns par rapport aux autres et qui comportent chacun une pluralité d'antennes, sont des systèmes qui ne permettent pas d'assurer une qualité de transmission stable du fait que ces antennes peuvent être masquées par le support qui les portent créant ainsi des zones d'ombres sur ces antennes. Ainsi, pour des personnes placées à une même distance l'une de l'autre, le bilan de liaison radio peut être très différent. En effet, l'inventeur a observé que certaines configurations des supports les uns par rapport aux autres provoquaient la rupture de la réception du signal de balise par un terminal esclave TEi, interdisant alors à ce terminal esclave d'établir une communication avec le terminal maître TM.

L'un des buts de la présente invention est de pallier ce problème de zones d'ombres, notamment en ce qui concerne le signal de balise, en proposant un procédé d'établissement d'une communication entre un terminal esclave et un terminal maître tel que décrit ci-dessus qui met en oeuvre de plus un mécanisme de sélection d'antennes de chacun desdits terminaux afin que le terminal esclave puisse établir une communication avec un terminal maître plus aisément qu'avec le procédé proposé par la norme DECT.

Le principe de base du procédé de la présente invention est de prévoir un mécanisme de sélection d'antennes qui est comparable au mécanisme de diversité d'antennes défini par la norme DECT et qui est néanmoins mis en oeuvre lorsqu'un signal de balise est reçu et ce, dès la synchronisation d'un terminal esclave contrairement au mécanisme de diversité d'antennes selon la norme DECT qui est inopérant tant qu'une communication n'est pas établie entre les terminaux.

Ainsi, un procédé selon l'invention est caractérisé en ce que :
- au cours de l'étape de recherche de synchronisation avec le terminal maître, chaque antenne d'un terminal esclave est considérée tour à tour pendant une durée prédéterminée et, pendant chaque durée, il est vérifié si un signal de balise émis par le terminal maître est reçu par l'antenne considérée pendant cette durée et, dans le cas où une antenne reçoit le signal de balise émis par le terminal maître, l'antenne est déterminée comme étant l'antenne de réception du terminal esclave,
- au cours de l'étape d'émission d'un signal de demande d'allocation de ressources radio, le terminal esclave émet le signal de demande d'allocation de ressources radio via l'antenne déterminée lors de l'étape comme étant l'antenne de réception,
- au cours de l'étape de réception par le terminal maître du signal de demande d'allocation de ressources radio, le terminal maître teste si plus d'une antenne reçoit le signal de demande d'allocation de ressources radio et sélectionne alors comme antenne de réception, l'antenne sur laquelle le niveau de puissance mesuré du signal reçu est le plus élevé, et
- au cours de l'étape, le terminal maître émet les ressources radio allouées via l'antenne sélectionnée lors de l'étape de réception du signal de demande d'allocation de ressources radio.

Préférentiellement, au cours de l'étape de diffusion d'un signal de synchronisation par le terminal maître, le signal de balise est émis par l'antenne qui est la plus dégagée du support qui la porte.

La communication entre le terminal maître et le terminal esclave est alors établie au moyen des antennes les plus pertinentes, c'est-à-dire celles qui permettent d'optimiser la qualité d'émission et de réception des signaux de balise et de demande d'allocation de ressources.

Selon un mode de réalisation, au cours de l'étape d'échanges de signaux de trafic entre le terminal maître et le terminal esclave, l'antenne de réception sélectionnée par un terminal est celle utilisée par ce terminal pour émettre un signal.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
La Fig. 1 représente le principe de l'accès multiple par division de temps,
La Fig. 2 représente schématiquement les échanges protocolaires entre deux terminaux qui sont requis par la norme DECT préalablement à la mise en oeuvre du mécanisme de diversité d'antennes et de *timing advance,*
La Fig. 3 représente schématiquement l'évolution temporelle d'une trame DECT à préambule normal,
La Fig. 4 représente schématiquement l'évolution temporelle d'une trame DECT à préambule long,
La Fig. 5 représente un exemple d'un système de communication par onde radiofréquence,
La Fig. 6 représente un exemple de positionnement des antennes d'un terminal porté par une personne PE, et
La Fig. 7 représente un diagramme des étapes d'un procédé de gestion d'antennes pour l'échange d'un signal de balise ou de trafic d'une communication radiofréquence établie entre deux terminaux d'un réseau de communication de type DECT.

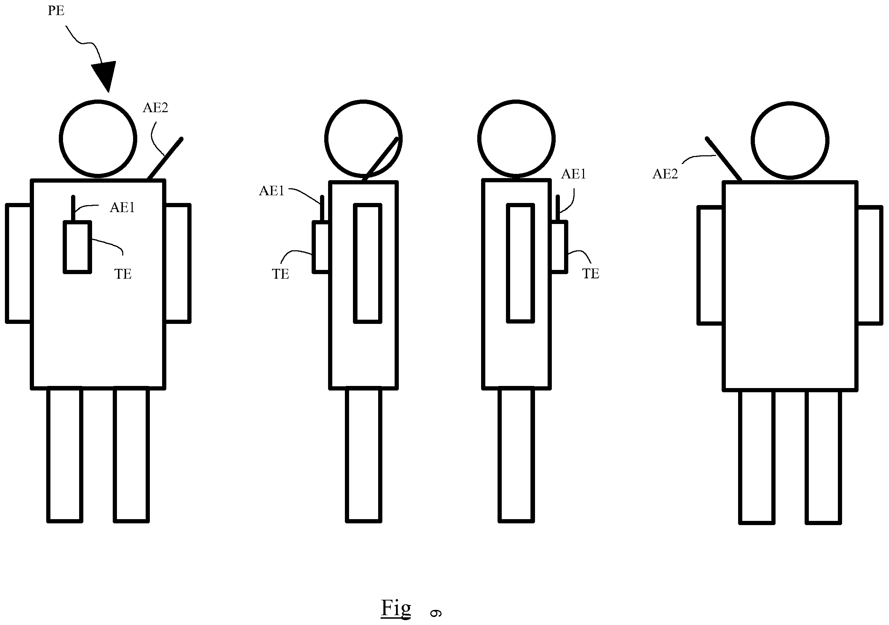

La Fig. 6 représente un exemple de positionnement d'antennes sur une personne PE selon l'invention.

Les quatre vues de la personne PE sont représentées à la Fig. 6. Celle la plus à gauche est la vue de face. On y voit le terminal TE, une première antenne AE1 et une seconde antenne AE2 qui sont positionnées sur des parties de la personne PE de manière à ce que chaque zone d'ombre de chaque antenne qui est provoquée par une partie du corps de la personne, tête, poitrail, est couverte par une autre antenne du terminal TE.

De préférence, l'antenne AE2 est déportée sur une épaule de la personne PE, en l'occurrence la gauche, et l'antenne AE1 est positionnée sur le poitrail de la personne PE.

Selon la variante du mode de réalisation représenté à la Fig. 6, l'antenne AE2 qui est déportée sur l'épaule est inclinée par rapport à la verticale d'un angle au plus égal à 45 degrés tandis que l'antenne AE1 est maintenue en position verticale et est solidaire du terminal TE.

De préférence, l'antenne AE2 est une antenne dipôle.

Selon un mode de réalisation, l'antenne de réception sélectionnée suite à la réception par un terminal d'un signal de trafic est utilisée pour l'émission d'un signal de trafic par ce terminal.

Le terminal TE est équipé de moyens MES pour mesurer le niveau de puissance d'un signal reçu par chaque antenne AE1 et AE2 et de moyens SEL pour sélectionner l'une de ces deux antennes AE1 et AE2 comme antenne de réception par comparaison des niveaux de puissance mesurés. Les moyens MES et SEL, qui forment un mécanisme de sélection d'antennes, sont activés à chaque réception d'un signal par le terminal TE et ce dès la synchronisation du terminal TE avec un terminal maître.

La Fig. 7 représente un diagramme des étapes du procédé de gestion d'antennes pour l'échange d'un signal de balise ou de trafic d'une communication radiofréquence établie entre un terminal esclave TE et un terminal maître TM d'un réseau de communication.

Le procédé est destiné à être mis en oeuvre par un terminal maître et par un terminal esclave tous deux prévus, d'une part, pour émettre des trames à préambule long telles que celles définies par la norme DECT et, d'autre part, pourvus de moyens, par exemple logiciels, pour mettre en oeuvre le procédé de gestion d'antennes en l'associant aux moyens MES, SEL, DS, MM et EM, tels que décrits précédemment. Par la suite, le procédé est décrit en considérant que chaque terminal est porté par une personne et que ce terminal est associé à une antenne AE1, solidaire de ce terminal, et à une antenne AE2 déportée sur l'épaule de la personne tel que illustré par la Fig 5. Cependant, le procédé peut être mis en oeuvre lorsque le terminal est porté sur un autre support et que plus de deux antennes lui sont associées.

Le procédé comporte une étape 100 de diffusion d'un signal de synchronisation, en l'occurrence un signal de balise Sb, par un terminal maître TM.

Préférentiellement, au cours de l'étape 100, le signal de balise Sb est émis par l'antenne AE2 du terminal maître TM, c'est-à-dire par l'antenne qui est la plus dégagée du support, en l'occurrence la personne.

On peut noter que l'étape 100 se poursuit tant que le terminal maître TM est en fonctionnement afin que la diffusion du signal de balise soit permanente.

L'étape 100 est suivie d'une étape 200 de recherche de synchronisation avec le terminal maître, au cours de laquelle l'antenne AE1 est considérée pendant une durée prédéterminée DT1. Pendant la durée DT1, il est vérifié si le signal de balise Sb est reçu sur l'antenne AE1. Si c'est le cas, l'antenne AE1 est déterminée comme étant l'antenne de réception. Sinon, à l'issue de la durée DT1, l'antenne AE2 est considérée pendant une durée prédéterminée DT2, par exemple égale à la durée DT1. Si c'est le cas, l'antenne AE1 est déterminée comme étant l'antenne de réception. Sinon, à l'issue de la durée DT2, l'antenne AE1 est considérée pendant la durée DT1, et ainsi de suite jusqu'à ce qu'une antenne soit déterminée comme étant une antenne de réception.

Dans le cas où une antenne de réception pour le terminal esclave a été déterminée au cours de l'étape 200, cette étape est suivie d'une étape 300 de synchronisation du terminal esclave TE avec le terminal maître TM au cours de laquelle le terminal esclave, une fois synchronisé avec le terminal maître, active son mécanisme de sélection d'antennes, c'est-à-dire les moyens MES et SEL. L'étape 300 est suivie d'une étape 400 d'émission par le terminal esclave TE d'un signal de demande d'allocation de ressources radio au cours de laquelle le terminal esclave TE émet, via l'antenne de réception déterminée par son mécanisme de sélection d'antennes, un signal de demande d'allocation de ressources radio DE, c'est-à-dire une demande d'une porteuse, à destination du terminal maître TM.

L'étape 400 est suivie d'une étape 500 de réception par le terminal maître TM du signal de demande d'allocation de ressources radio DE. Au début de l'étape 500, le terminal maître TM effectue une opération de diversité d'antennes, c'est-à-dire que dans le cas où le signal DE est reçu par les deux antennes AE1 et AE2, l'antenne de réception sélectionnée est celle sur laquelle le niveau de puissance du signal DE est le plus élevé.

L'étape 500 est suivie d'une étape 600 d'émission par le terminal maître TM des ressources radio allouées, c'est-à-dire d'une porteuse constituée d'un *slot* sn dédié à l'émission et d'un slot s(n+12) dédié à la réception via l'antenne de réception sélectionnée lors de la réception du signal DE.

La communication entre le terminal maître TM et le terminal esclave TE est alors établie sur les antennes les plus pertinentes, éliminant ainsi l'obstacle que représente le support.

L'étape 600 est suivie d'une étape 700 d'échanges de signaux de trafic entre le terminal maître TM et le terminal esclave TE.

A chaque réception d'un signal de trafic, par le terminal esclave TE, le terminal esclave TE effectue une opération de sélection de la meilleure antenne.

A chaque réception d'un signal de trafic par le terminal maître TM, le terminal maître TM effectue une opération de sélection de la meilleure antenne.

Selon un mode de réalisation, le signal de balise est toujours émis par l'antenne la plus dégagée du support.

Selon un mode de réalisation, au cours de l'étape 700, l'antenne de réception sélectionnée par le terminal esclave TE est celle utilisée par le terminal esclave TE pour émettre un signal. De même, l'antenne de réception sélectionnée par le terminal maître TM lors de la réception d'un signal de trafic émis par le terminal esclave TE est celle utilisée par le terminal maître TM pour émettre un signal de trafic à destination dudit terminal esclave TE.

## Revendications

1. Procédé d'établissement d'une communication radiofréquence entre un terminal dit esclave et un terminal dit maître d'un réseau de communication de type DECT, chaque terminal étant équipé d'une pluralité d'antennes et comportant des moyens pour mesurer le niveau de puissance d'un signal reçu par chaque antenne et des moyens pour sélectionner l'une de ces antennes comme antenne de réception par comparaison des niveaux de puissance ainsi mesurés,
ledit terminal maître étant destiné à diffuser un signal de balise sur lequel se synchronise en temps et en fréquence ledit terminal esclave,
ledit procédé comportant ;
- une étape (100) de diffusion permanente d'un signal de balise par le terminal maître,
- une étape (200) de recherche de synchronisation en temps et en fréquence dudit terminal esclave avec le terminal maître,
- une étape (300) de synchronisation du terminal esclave avec le terminal maître,
- une étape (400) d'émission d'un signal de demande d'allocation de ressources radio,
- une étape (500) de réception par le terminal maître du signal de demande d'allocation de ressources radio,
- une étape (600) d'émission par le terminal maître des ressources radio allouées,
et une étape (700) d'échanges de signaux de trafic entre le terminal maître et le terminal esclave, au cours de laquelle à chaque réception d'un signal de trafic par soit le terminal esclave, soit le terminal maître, un terminal récepteur teste si plus d'une antenne reçoit un signal de trafic et sélectionne alors l'antenne de réception comme étant celle sur laquelle le niveau de puissance mesuré du signal reçu est le plus élevé,
**caractérisé en ce que**
- au cours de l'étape (200) de recherche de synchronisation avec le terminal maître, chaque antenne d'un terminal esclave est considérée tour à tour pendant une durée prédéterminée et, pendant chaque durée, il est vérifié si un signal de balise émis par le terminal maître est reçu par l'antenne considérée pendant cette durée et, dans le cas où une antenne reçoit le signal de balise émis par le terminal maître, l'antenne est déterminée comme étant l'antenne de réception du terminal esclave,
- au cours de l'étape (400) d'émission d'un signal de demande d'allocation de ressources radio, le terminal esclave émet le signal de demande d'allocation de ressources radio via l'antenne déterminée lors de l'étape (200) comme étant l'antenne de réception,
- au cours de l'étape (500) de réception par le terminal maître du signal de demande d'allocation de ressources radio, le terminal maître teste si plus d'une antenne reçoit le signal de demande d'allocation de ressources radio et sélectionne alors comme antenne de réception, l'antenne sur laquelle le niveau de puissance mesuré du signal reçu est le plus élevé, et
- au cours de l'étape (600), le terminal maître émet les ressources radio allouées via l'antenne sélectionnée lors de l'étape (500) de réception du signal de demande d'allocation de ressources radio.

2. Procédé selon la revendication 1, dans lequel au cours de l'étape de diffusion (100) d'un signal de balise, le signal de balise est émis par l'antenne qui est la plus dégagée du support qui la porte.

3. Procédé selon la revendication 1 ou 2, dans lequel au cours de l'étape (700) d'échanges de signaux de trafic entre le terminal maître et le terminal esclave, l'antenne de réception sélectionnée par un terminal est celle utilisée par ce terminal pour émettre un signal.

4. Système de communication par onde radiofréquence entre terminaux de communication mobile, **caractérisé en ce que** chaque terminal comporte des moyens pour mettre en oeuvre un procédé conforme à l'une des revendications 1 à 3.

## Patentansprüche

1. Verfahren zur Herstellung einer Funkkommunikation zwischen einem sogenannten Slave-Endgerät und einem sogenannten Master-Endgerät eines DECT-Kommunikationsnetzes, wobei jedes Endgerät mit mehreren Antennen ausgerüstet ist und Mittel zum Messen des Leistungspegels eines durch jede Antenne empfangenen Signals sowie Mittel zum Auswählen einer dieser Antennen als Empfangsantenne durch Vergleich der so gemessenen Leistungspegel aufweist,
wobei das Master-Endgerät dazu bestimmt ist, ein Bakensignal rundzusenden, mit dem sich das Slave-Endgerät bezüglich Zeit und Frequenz synchronisiert,
wobei das Verfahren umfasst:
- einen Schritt (100) des ständigen Rundsendens eines Bakensignals durch das Master-Endgerät,
- einen Schritt (200) der Suche nach Synchronisation bezüglich Zeit und Frequenz des Slave-Endgeräts mit dem Master-Endgerät,
- einen Schritt (300) der Synchronisation des Slave-Endgeräts mit dem Master-Endgerät,
- einen Schritt (400) des Sendens eines Funkressourcenzuweisungs-Anforderungssignals,
- einen Schritt (500) des Empfangs des Funkressourcenzuweisungs-Anforderungssignals durch das Master-Endgerät,
- einen Schritt (600) des Sendens der zugewiesenen Funkressourcen durch das Master-Endgerät, und
- einen Schritt (700) des Austauschs von Verkehrssignalen zwischen dem Master-Endgerät und dem Slave-Endgerät, in welchem bei jedem Empfang eines Verkehrssignals durch entweder das Slave-Endgerät oder das Master-Endgerät das empfangende Endgerät prüft, ob mehr als eine Antenne ein Verkehrssignal empfängt, und dann als Empfangsantenne diejenige auswählt, an welcher der gemessene Leistungspegel des empfangenen Signals am höchsten ist,
**dadurch gekennzeichnet, dass**
- im Schritt (200) der Suche nach Synchronisation mit dem Master-Endgerät die einzelnen Antennen eines Slave-Endgeräts nacheinander während eines vorbestimmten Zeitraums betrachtet werden und während jedes Zeitraums überprüft wird, ob ein von dem Master-Endgerät gesendetes Bakensignal durch die betrachtete Antenne während dieses Zeitraums empfangen wird, und in dem Falle, wenn eine Antenne das von dem Master-Endgerät gesendete Bakensignal empfängt, die Antenne als die Empfangsantenne des Slave-Endgeräts bestimmt wird,
- im Schritt (400) des Sendens eines Funkressourcenzuweisungs-Anforderungssignals das Slave-Endgerät das Funkressourcenzuweisungs-Anforderungssignal über die Antenne sendet, die im Schritt (200) als die Empfangsantenne bestimmt wurde,
- im Schritt (500) des Empfangs des Funkressourcenzuweisungs-Anforderungssignals durch das Master-Endgerät das Master-Endgerät prüft, ob mehr als eine Antenne das Funkressourcenzuweisungs-Anforderungssignal empfängt, und dann als Empfangsantenne die Antenne auswählt, an welcher der gemessene Leistungspegel des empfangenen Signals am höchsten ist, und
- im Schritt (600) das Master-Endgerät die zugewiesenen Funkressourcen über die Antenne sendet, die im Schritt (500) des Empfangs des Funkressourcenzuweisungs-Anforderungssignals ausgewählt wurde.

2. Verfahren nach Anspruch 1, wobei im Schritt des Rundsendens (100) eines Bakensignals das Bakensignal von der Antenne gesendet wird, die von dem Träger, der sie trägt, am weitesten absteht.

3. Verfahren nach Anspruch 1 oder 2, wobei im Schritt (700) des Austauschs von Verkehrssignalen zwischen dem Master-Endgerät und dem Slave-Endgerät die von einem Endgerät ausgewählte Empfangsantenne diejenige ist, die von diesem Endgerät zum Senden eines Signals verwendet wird.

4. System zur Funkkommunikation zwischen Mobilkommunikations-Endgeräten, **dadurch gekennzeichnet, dass** jedes Endgerät Mittel zur Durchführung eines Verfahrens gemäß einem der Ansprüche 1 bis 3 aufweist.

## Claims

1. Method for establishing radiofrequency communication between what is termed a slave terminal and what is termed a master terminal of a DECT communication network, each terminal being equipped with a plurality of antennae and including means for measuring the power level of a signal received by each antenna and means for selecting one of these antennae as a reception antenna by comparing the power levels thus measured, said master terminal being intended to broadcast a beacon signal with which said slave terminal time-synchronizes and frequency-synchronizes itself,
said method including:
- a step (100) of continuous broadcasting of a beacon signal by the master terminal,
- a step (200) of seeking to time-synchronize and frequency-synchronize said slave terminal with the master terminal,
- a step (300) of synchronizing the slave terminal with the master terminal,
- a step (400) of transmitting a radio resources allocation request signal,
- a step (500) of reception, by the master terminal, of the radio resources allocation request signal,
- a step (600) of transmission, by the master terminal, of the allocated radio resources,
and a step (700) of exchanging traffic signals between the master terminal and the slave terminal, during which, upon each reception of a traffic signal by either the slave terminal or the master terminal, a receiver terminal tests whether more than one antenna receives a traffic signal and then selects the reception antenna to be the one on which the measured power level of the received signal is highest, **characterized in that**
- during the step (200) of seeking to synchronize with the master terminal, each antenna of a slave terminal is considered in turn for a predetermined period and, during each period, it is checked whether a beacon signal transmitted by the master terminal is received by the antenna under consideration during this period and, if an antenna receives the beacon signal transmitted by the master terminal, the antenna is determined as being the reception antenna of the slave terminal,
- during the step (400) of transmitting a radio resources allocation request signal, the slave terminal transmits the radio resources allocation request signal via the antenna determined in step (200) as being the reception antenna,
- during the step (500) of reception, by the master terminal, of the radio resources allocation request signal, the master terminal tests whether more than one antenna receives the radio resources allocation request signal and then selects, as reception antenna, the antenna on which the measured power level of the received signal is highest, and I
- during the step (600) the master terminal transmits the allocated radio resources via the antenna selected in step (500) of reception of the radio resources allocation request signal.

2. Method according to Claim 1, wherein, during the step (100) of broadcasting a beacon signal, the beacon signal is transmitted by the antenna that is the furthest clear from the support carrying it.

3. Method according to Claim 1 or 2, wherein, during the step (700) of exchanging traffic signals between the master terminal and the slave terminal, the reception antenna selected by a terminal is the one used by this terminal to transmit a signal.

4. System for radiofrequency wave communication between mobile communication terminals, **characterized in that** each terminal includes means for implementing a method according to one of Claims 1 to 3.
